# EUROPÄISCHE PATENTSCHRIFT

(11) **EP 1 514 055 B1**
(45) Veröffentlichungstag und Bekanntmachung des Hinweises auf die Patenterteilung: **17.09.2008**
(21) Anmeldenummer: 03759959.4
(22) Anmeldetag: 13.06.2003
(51) Int. Cl.: F21S 8/00, G02B 27/00

(54) **KONTRASTVERSTÄRKUNG FÜR ANZEIGEN**
CONTRAST REINFORCEMENT FOR DISPLAYS
AMPLIFICATEUR DE CONTRASTE POUR DES AFFICHEURS

(30) Priorität: 14.06.2002 DE 10226606; 26.07.2002 DE 10234153; 09.12.2002 DE 10257451
(43) Veröffentlichungstag der Anmeldung: 16.03.2005
(73) Patentinhaber: Maschek, Hubertus, 86916 Kaufering (DE)
(72) Erfinder: Maschek, Hubertus, 86916 Kaufering (DE)
(74) Vertreter: Vossius & Partner
(86) Internationale Anmeldenummer: PCT/EP2003/006281
(87) Internationale Veröffentlichungsnummer: WO 2003/106890

(56) Entgegenhaltungen:
- EP-A- 0 759 572
- US-A- 4 392 077
- US-A- 4 573 082
- US-A- 5 210 641
- US-B1- 6 249 375

## Beschreibung

Die Erfindung betrifft ein Verfahren und eine Vorrichtung zur Kontrastverstärkung für Anzeigevorrichtungen. Hierbei wird eine kontrastreiche Darstellung optischer Signale und/oder Symbole durch die Bereitstellung eines lichtabsorbierenden und/oder lichtableitenden Hintergrundes erreicht, der im Vergleich zum anzuzeigenden Symbol oder Signal dunkel ist und dieses dadurch hervorhebt. Die folgende Erfindung ermöglicht eine kontrastreiche Darstellung optischer Signale und Symbole durch die Bereitstellung eines dunklen, lichtabsorbierenden Hintergrundes.

Optische Anzeigen sind in heller Umgebung oft schwer zu erkennen. Um dem entgegenzuwirken und um den Kontrast zwischen Anzeige und Umgebung zu erhöhen, muß die Lichtleistung der Einrichtung erhöht werden, wodurch mehr Energie verbraucht wird. Eine weitere Möglichkeit besteht in der Bereitstellung von Abschirmelementen, die auf die Anzeige fallendes Störlicht abschirmen sollen. Derartige Abschirmeinrichtungen schränken im Regelfall die Sichtbarkeit der Anzeige ein oder schirmen einfallendes Störlicht, wie z.B. Sonnenlicht nur unzureichend ab. Oftmals gestaltet sich das Abschirmen gegen variables Störlicht z.B. mit wanderndem Einfallswinkel, schwierig.

Die DE-T-693 26 611 offenbart eine Vorrichtung zur Verhinderung eines Pseudo-Lichtphänomens in einer Signallampe, die zwischen einer Lichtquelle und einer Abdeckungslinse vorgesehen ist, wobei die Vorrichtung ein Paar zusammengesetzter Kugellinsen in spezieller Anordnung und ein Abschirmbauteil, das zwischen dem Linsenpaar angeordnet ist und lichtdurchlässige Löcher aufweist.

US-B1-6 249 375 beschreibt ein optisches Element für Verkehrszeichen, Anzeigetafeln oder ähnliches. Das optische Element weist ein Gebäuse auf, in dem eine LED mit einem Hilfsreflektor am rückwärtigen Ende, eine unmittelbar vor der LED koaxial angeordnete konvergierende Linse und eine am vorderen Ende des Gehäuses befindliche Zerstreuungslinse angeordnet sind. Die von der LED und dem Hilfsreflektor ausgehenden Lichtstrahlen werden von der konvergierenden Linse in einem Brennpunkt gebündelt, bevor sie auf die Zerstreuungslinse treffen. In einer Ausführungsform ist eine Blende mit einer Blendenöffnung im Bereich des Brennpunkts angeordnet, wobei die Blendenöffnung an den Rand der Lichtstrahlen angepasst ist. D.h. die von der LED kommenden Lichtstrahlen gehen durch die konvergierende Linse, die Öffnung in der Blende und dann durch die Zerstreuungslinse, wo sie das optische Element verlassen.

Der vorliegenden Erfindung liegt daher die Aufgabe zugrunde, ein Verfahren und eine Vorrichtung bereitzustellen, mit dem bzw. mit der der Kontrast zwischen Anzeige bzw. Signal und Hintergrund bzw. Umgebung unabhängig von Richtung und Intensität des einfallenden Störlichts erhöht wird. Eine weitere Aufgabe der vorliegenden Erfindung liegt im Überwinden weiterer Nachteile des Standes der Technik.

Diese Aufgaben werden mit den Merkmalen der Patentansprüche gelöst. Die Erfindung geht von dem Grundgedanken aus, daß das von außen auf die Vorrichtung fallende Licht durch eine Linse zu einer Einrichtung geleitet wird, die das Licht absorbiert und/oder ableitet, so daß ein dunkler Hintergrund entsteht. Dieser steht bezüglich seiner Helligkeit im Kontrast zu dem betreffenden Signal und/oder Symbol, so daß dieses für den Betrachter deutlich zu erkennen ist, Weiterhin wird die zur deutlichen Erkennbarkeit des Signals oder Symbols benötigte Lichtleistung verringert, so daß Energie gespart wird.

In einer bevorzugten erfindungsgemäßen Ausführungsform weist die Vorrichtung mindestens eine Sammellinse, mindestens eine Lochblende sowie mindestens eine Einrichtung zur Absorption von Licht auf. Außerdem weist die Vorrichtung eine Lichtquelle auf. Sammellinse, Lochblende und Absorptionseinrichtung werden in der genannten Reihenfolge angeordnet, wobei die Linse das einfallende Licht sammelt und dieses durch die Blendenöffnung zu der Absorptionseinrichtung leitet. Die Absorptionseinrichtung weist vorzugsweise eine lichtabsorbierende, bevorzugt dunkle oder schwarze Schicht auf.

In einer weiteren bevorzugten Ausführungsform weist die Vorrichtung mindestens eine Sammellinse, mindestens eine Lochblende sowie mindestens eine Einrichtung zum Ableiten bzw. Reflektieren von Licht auf. Außerdem weist die Ausführungsform ferner eine Lichtquelle auf. Wie bei der vorgangs beschriebenen bevorzugten Ausführungsform wird das einfallende Licht durch die Linse gesammelt und durch die Blendenöffnung zu der Einrichtung zum Ableiten von Licht geleitet.

Eine weitere bevorzugte erfindungsgemäße Ausführungsform stellt die Kombination der beiden beschriebenen Ausführungsformen dar, wobei die, bezogen auf die Einfallsrichtung des Lichtes, hinter der Blende angeordnete Einrichtung als Einrichtung zum Ableiten und Absorbieren von Licht ausgebildet ist.

Eine weitere bevorzugte erfindungsgemäße Ausführungsform weist mindestens eine Streulinse sowie mindestens eine Einrichtung zum Ableiten und/oder Absorbieren von Licht auf. In einer weiteren bevorzugten Ausführungsform weist diese Vorrichtung weiterhin mindestens eine Lichtquelle auf.

In einer erfindungsgemäßen Ausführungsform weist die Vorrichtung zusätzlich zu den beschriebenen Merkmalen mindestens eine Lichtquelle auf. Die Vorrichtung weist hierbei vorzugsweise aktive und/oder passive Lichtquellen auf. Aktive Lichtquellen sind vorzugsweise als Laser, Glühlampe, lichtemittierende Diode (LED), organische LED (OLED), Elektrolumineszenz-Folie (EL-Folie), Neonröhre, etc. ausgebildet. Passive Lichtquellen bzw. Lichtventile oder Lichtleiter bestehen meist aus einer reflektierenden Schicht, die einfallendes Licht reflektiert. Hierzu wird bevorzugt das in die Vorrichtung einfallende Licht, auch Störlicht genannt, genutzt. In einer besonders bevorzugten Ausführungsform wird die reflektierende Schicht durch ein Flüssigkristalldisplay ersetzt.

In einer weiteren bevorzugten Ausführungsform wird das Licht der Lichtquelle Ober Lichtleiter an den vorgesehenen Ort übertragen. In einer weiteren bevorzugten Ausführungsform weist die Vorrichtung Lichtquellen unterschiedlicher Grundfarbe (z.B. RGB) auf, so daß sich beispielsweise bei Großanzeigen unterschiedliche Mischfarben bei hohem Kontrast darstellen lassen. In einer weiteren bevorzugten Ausführungsform werden für die drei Grundfarben mindestens drei Lichtquellen vorgesehen, die jeweils zusammen eine Linse benutzen.

Die Lichtquelle wird vorzugsweise in einer weiteren Ebene, die sich vor, in oder hinter der Linse befindet, angeordnet. Bei Positionierung der Lichtquelle hinter der Linse wird diese gleichzeitig zur Fokussierung des ausgesandten Lichts benutzt. In weiteren bevorzugten Ausführungsformen kann die Lichtquelle beliebig plaziert werden. Hierbei ist es möglich, die Vorrichtung zur Erzeugung einer dunklen, vorzugsweise kontrastbildenden Fläche zu benutzen.

In einer weiteren bevorzugten Ausführungsform sind die Lichtquellen ihrerseits mit optischen Einrichtungen ausgestattet. Hierbei handelt es sich vorzugsweise um konvexe oder konkave Linsen, Spiegel und/oder Reflexionselemente, etc. Trifft Licht bzw. Störlicht auf die Vorrichtung, so wird dieses in der Linse fokussiert und durch die Blendenöffnung zu der Einrichtung zum Ableiten oder Absorbieren von Licht geleitet. In der Einrichtung wird das Licht abgeleitet und/oder absorbiert, wobei der Weg zurück durch die Blende zum größten Teil versperrt ist. Hieraus ergibt sich eine deutliche Kontrastverbesserung, d.h. die Anzeigefläche ist auch in heller Umgebung oder bei direkter Sonnenbestrahlung dunkler. Wird nun die Lichtquelle aktiviert, ergibt sich eine deutlich wahmehmbare Lichtquelle mit hohem Kontrast.

In einer bevorzugten Ausführungsform wird der Abstrahlwinkel über die Position der Lichtquelle, die vor, innerhalb, hinter und/oder neben der Linse angeordnet ist, festgelegt. In einer weiteren bevorzugten Ausführungsform wird der Abstrahlwinkel über die Position der Lichtquelle gegenüber dem Brennpunkt der Linse festgelegt. In einer weiteren bevorzugten erfindungsgemäßen Ausführungsform wird der mögliche Einfallswinkel des zu absorbierenden Lichts durch die Größe der Blendenöffnung und/oder den Abstand Linse/Blende eingestellt. Durch die Position der Blendenöffnung wird weiterhin bevorzugt die Vorzugsrichtung des zu absorbierenden Lichts bzw. Störlichts, wie z.B. des Sonnenlichts eingestellt. Ebenso ist die Kontrastverbesserung bevorzugt mit der Blendengröße einstellbar.

Weiterhin ist die Blendenöffnung vorzugsweise in bezug auf Größe und Position variabel einstellbar ausgeführt, so daß direktes Streulicht, wie z.B. Sonnenstrahlen oder Scheinwerferlicht, etc., in den Bereich zwischen Blende und Einrichtung zum Ableiten und/oder Absorbieren von Licht oder zu der Einrichtung ableitbar ist. In einer weiteren bevorzugten erfindungsgemäßen Ausführungsform weist die Blende mehrere Blendenöffnungen pro Linse auf.

In einer weiteren bevorzugten Ausführungsform weist die Einrichtung zum Absorbieren oder Ableiten von Licht mindestens eine Fläche auf, die das zur Einrichtung geleitete Licht reflektiert und/oder absorbiert. Diese Fläche ist vorzugsweise groß gegenüber der Fläche der Linse ausgeführt, um den Kontrast weiter zu erhöhen. Vorzugsweise ist die beschriebene Fläche für einen größeren Störlichteinfall gegenüber der Fläche der Linse größer auszuführen. Eine Vergrößerung der Fläche ist weiterhin vorzugsweise durch Aufrauhen, Schrägstellen in Bezug zum einfallenden Licht, Strukturieren durch beispielsweise eine wellige Oberfläche, Ausbilden einer pyramidenartigen Struktur, etc. zu erreichen.

In einer weiteren bevorzugten Ausführungsform ist die Einrichtung als direkt hinter der Blende angeordneter Hohlraum ausgeführt. Dieser weist vorzugsweise eine zur Absorption des einfallenden Lichts geeignete Innenoberfläche auf. Diese ist vorzugsweise dunkel, schwarz und/oder beschichtet ausgeführt. Vorzugsweise weist die Innenoberfläche eine Schicht aus Graphit und/oder aufgerauhtem Graphit auf. Weiterhin ist der Hohlraum und/oder sind die Innenwände der Einrichtung vorzugsweise geeignet für die Absorption von Licht ausgebildet. Hierbei ist der Hohlraum vorzugsweise zylindrisch, kegelförmig, kugelförmig und/oder quaderförmig ausgebildet.

In einer weiteren bevorzugten Ausführungsform der Erfindung weist die Einrichtung bzw. der Hohlraum der Einrichtung, weitere Hohlräume, der Bereich vor und/oder hinter der Blende und/oder der Bereich hinter der Linse ein vorzugsweise lichtdurchlässiges Material und/oder Fluid auf bzw. ist/sind mit diesem ausgefüllt. Das vorzugsweise lichtdurchlässige Material und/oder das Fluid weisen vorzugsweise ein unterschiedliches Brechungsverhalten im Vergleich zur Linse auf. Das lichtdurchlässige Material ist vorzugsweise Kunststoff. Das Fluid ist vorzugsweise ein Gas und bevorzugt ein Schutzgas.

In einer weiteren bevorzugten Ausführungsform der Erfindung weist die Vorrichtung nur eine Linse oder nur Linsen auf, die vorzugsweise vor bzw. außerhalb der Einrichtung zum Absorbieren oder Ableiten von Licht angeordnet ist/sind.

Die beschriebene Konstruktion wird vorzugsweise als Spritzgußteil mit eingelegter Glas- oder Kunststofflinse und/oder Glas- oder Kunststoffspiegel ausgebildet.

In einer bevorzugten Ausführungsform der Erfindung sind alle optischen (lichtdurchlässigen) Teile mit einer Antireflexbeschichtung versehen, um den Kontrast weiter zu erhöhen. Vorzugsweise ist der Aufbau schwarz und/oder stark aufgerauht auszuführen, um Reflexionen zu minimieren. In einer weiteren bevorzugten Ausführungsform weist die Vorrichtung mindestens einen Schirm auf, der diese vor zu steil einfallendem Stör- bzw. Sonnenlicht schützt. Der Schirm ist vorzugsweise zumindest teilweise um die Linse angeordnet.

In einer weiteren bevorzugten Ausführungsform wird die Lichtquelle selbst als Linse und/oder als Linsenarray ausgeführt (z.B. LED) und leitet das einfallende Licht, wie oben beschrieben, weiter. Die Blende wird in einer bevorzugten Ausführungsform als Flüssigkristallanzeige ausgeführt. Größe und/oder Position der Blende und/oder der Blendenöffnung ist bei der Ausführungsform, als Flüssigkristallanzeige bevorzugt einstellbar.

In einer besonders bevorzugten Ausführungsform besteht die Vorrichtung bzw. die Anzeige der Vorrichtung aus mehreren Linsen und/oder mehreren Lichtquellen. Ein Vorrichtungssystem oder Array besteht vorzugsweise aus quadratischen Linsen ohne Zwischenraum und/oder länglichen Linsen mit einer Schlitzblende.

In einer bevorzugten erfindungsgemäßen Ausführungsform wird die Anordnung flach, kubisch, zylindrisch und/oder als Kreissegment, etc. ausgebildet, um u.a. den Abstrahlwinkel zu vergrößern.

Bei einer Anordnung erfindungsgemäßer Vorrichtungen im Array kann in einer bevorzugten Ausführungsform durch eine unterschiedliche Position der Lichtquellen gegenüber dem Brennpunkt der zugehörigen Linse gezielt der ausgeleuchtete Bereich festgelegt werden. Hiermit wird beispielsweise bewirkt, daß beispielsweise Ampeln auch direkt von unten sichtbar sind.

In einer weiteren bevorzugten Ausführungsform ist bei einer unsymmetrischen Anordnung der Lichtquellen in Bezug auf den Brennpunkt der Linse der von der Lichtquelle bestrahlte Bereich einstellbar.

In einer weiteren bevorzugten Ausführungsform kann der Kontrast durch den Einsatz mehrerer Linsen und/oder durch Umlenkung mit Hilfe von Spiegeln und/oder durch Vergrößerung der Fläche der Einrichtung zur Absorption und/oder Ableitung von Licht noch weiter erhöht werden.

In einer weiteren erfindungsgemäßen Ausführungsform ist der Einfallswinkel des Störlichts mit Hilfe von Sensoren ermittelbar, so daß die Größe der Blende und/oder deren Position entsprechend justierbar ist. In einer weiteren bevorzugten Ausführungsform ist bei fehlendem oder geringem Störlicht bzw. bei Erreichung eines starken Kontrastes die Lichtleistung der Lichtquelle reduzierbar.

Weitere bevorzugte erfindungsgemäße Ausführungen werden in Nanotechnologie ausgeführt, um tageslichttaugliche Kleindisplays herzustellen.

Die Erfindung wird nachfolgend anhand bevorzugter Ausführungsbeispiele und der Zeichnungen erläutert. Es zeigen:
- Figur 1: eine Prinzipdarstellung einer ersten exemplarischen Ausführungsform,
- Figur 2: eine Prinzipdarstellung einer ersten bevorzugten erfindungsgemäßen Ausführungsform,
- Figur 3: eine Prinzipdarstellung einer zweiten bevorzugten erfindungsgemäßen Ausführungsform.
- Figur 4: eine Prinzipdarstellung einer dritten bevorzugten erfindungsgemäßen Ausführungsform,
- Figur 5: eine Prinzipdarstellung einer zweiten exemplarischen Ausführungsform,
- Figur 6: eine Prinzipdarstellung einer vierten bevorzugten erfindungsgemäßen Ausführungsform, und
- Figur 7: eine Prinzipdarstellung einer fünften bevorzugten erfindungsgemäßen Ausführungsform, und
- Figur 8: eine Prinzipdarstellung einer dritten exemplarischen Ausführungsform.
- Figur 9: eine Prinzipdarstellung einer vierten exemplarischen Ausführungsform, und
- Figur 10: eine Prinzipdarstellung einer fünften exemplarischen Ausführungsform, und

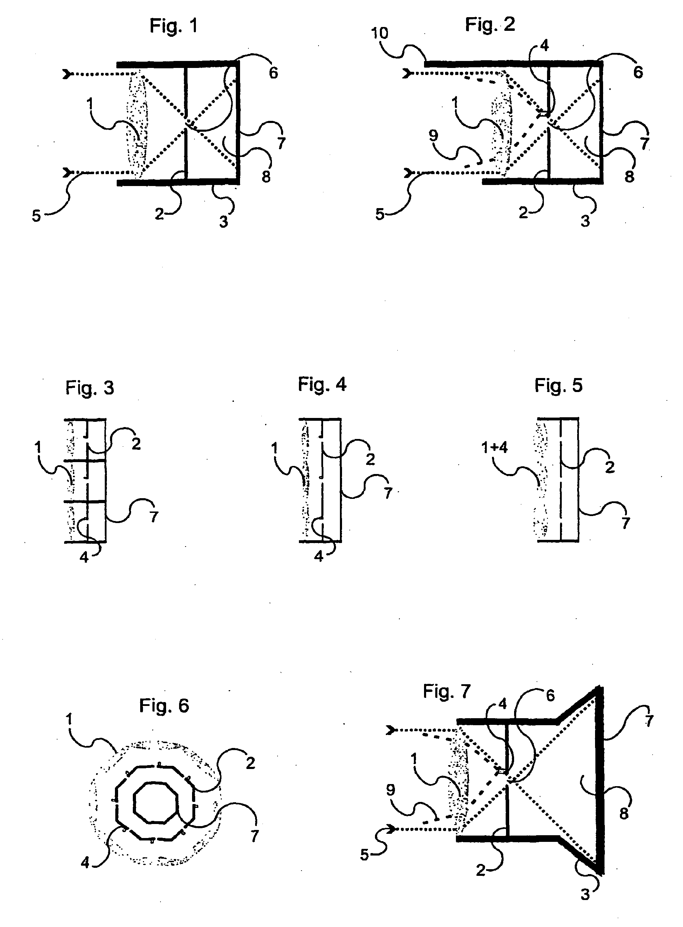

Figur 1 zeigt eine exemplarische Ausführungsform einer Vorrichtung mit einer Linse 1, einer Blende 2 sowie einer Einrichtung zum Ableiten und/oder Absorbieren von Licht 3. Linse 1, Blende 2 und Einrichtung 3 sind derart angeordnet, daß von außen einfallendes Licht 5 durch die Linse 1 fokussiert und durch die Blendenöffnung 6 zu der Einrichtung 3 geleitet wird. Das einfallende Licht 5 trifft auf die Einrichtung 3 an der Fläche 7. Fläche 7 hat in einer lichtabsorbierende Eigenschaften, so daß sie nur einen geringen Anteil des Lichts 5 reflektiert. Hierzu ist die Fläche 7 vorzugsweise zumindest teilweise dunkel bzw. schwarz und/oder weist eine Beschichtung mit absorbierenden Eigenschaften auf. Hierzu zählen beispielsweise Graphit oder aufgerauhtes Graphit.

In einer weiteren exemplarischen Ausführungsform bildet die Einrichtung 3 einen sich hinter der Blende 2 erstreckenden Hohlraum 8. Die Innenflächen des Hohlraums 8 weisen hierbei vorzugsweise absorbierende Eigenschaften auf. Dies wird bevorzugt durch die im Zusammenhang mit Fläche 7 beschriebenen bevorzugten Ausführungsformen erreicht. Durch die Blendenöffnung 6 in den Hohlraum 8 gelangendes Licht wird somit an den Innenflächen der Einrichtung 3 zu einem Teil absorbiert und zu einem Teil reflektiert. Vorzugsweise wird das Licht nur zu einem geringen Teil, wenn überhaupt, reflektiert. Reflektiertes Licht trifft wiederum auf einen anderen Bereich der Innenfläche der Einrichtung 3 auf, wo es wiederum absorbiert und nur zu einem geringen Grad reflektiert wird. Dieser Vorgang wiederholt sich so lange, bis das einfallende Licht vollständig oder zumindest nahezu vollständig absorbiert ist. Vorzugsweise wird hierbei etwa 50% bis 99,9999% des einfallenden Lichts absorbiert. Da die Blendenöffnung 6 der Blende 2 im Verhältnis zur Innenoberfläche der Einrichtung 3 klein ist, und da die Einrichtung 3 das einfallende Licht 5 absorbiert, fällt kein Licht von der Einrichtung 3 zurück durch die Blendenöffnung 6. Da die Linse 1 alles durch sie fallende Licht durch die Blendenöffnung 6 zu der Einrichtung 3 fokussiert, wo dieses absorbiert wird, bleibt der Hintergrund der Linse 1, also die Vorderseite der Blende 2, dunkel, da kein Licht auf die Blende 2 trifft. Die dunkle Fläche hebt sich somit kontrastreich von der, durch das einfallende Licht 5 angestrahlten Umgebung ab. Wird eine Lichtquelle bzw. ein Signal in der Nähe der Einrichtung 3 plaziert, so wird diese durch den Kontrast zur dunklen Fläche der Vorrichtung stärker hervorgehoben und ist somit deutlicher wahrzunehmen. Mit einer derartigen Ausführungsform kann vorzugsweise ein Kontrastgewinn von etwa 50% bis 99,9999% erreicht werden. Das Verhältnis der Fläche der Blendenöffnung 6 zur Fläche des auf die Linse 1 auffallenden Lichts beträgt vorzugsweise 1:2 bis 1:10000 und besonders bevorzugt 1:4 bis 1:1000.

In einer weiteren exemplarischen Ausführungsform ist die Einrichtung 3 einteilig mit der Blende 2 und/oder dem Gehäuse der Vorrichtung ausgebildet.

In einer weiteren exemplarischen Ausführungsform weist die Einrichtung zum Absorbieren und/oder Ableiten von Licht reflektierende Elemente und/oder Oberflächen, wie z.B. Spiegel, etc, auf. Diese reflektieren das einfallende Licht 5 derart, daß es nicht mehr durch die Blende 2 zurückfallen kann und leiten es an eine Stelle, wo es zurück an die Umgebung gegeben und/oder absorbiert werden kann (nicht dargestellt). ,

In einer weiteren exemplarischen Ausführungsform der Erfindung ist in der Einrichtung bzw. im Hohlraum 8 der Einrichtung ein zusätzliches Medium angeordnet. Hierbei handelt es sich in einer besonderen erfindungsgemäßen Ausführungsform um vorzugsweise lichtdurchlässiges Material und/oder ein Fluid, dass die Einrichtung bzw. den Hohlraum 8 zumindest teilweise ausfüllt. Das Medium weist hierbei vorzugsweise ein unterschiedliches Brechungsverhalten im Vergleich zur Linse 1 auf. In einer exemplarischen Ausführungsform weist das Medium Eigenschaften auf, durch die die kontrastverstärkenden Eigenschaften der Einrichtung 3 unterstützt bzw. gefördert werden.

In einer exemplarischen Ausführungsform ist das Medium ein lichtdurchlässiges Material, vorzugsweise ein Kunststoff. In einer weiteren exemplarischen Ausführungsform ist das Fluid ein Gas, vorzugsweise ein Schutzgas.

In weiteren exemplarischen Ausführungsformen weisen der Bereich vor und/oder hinter der Blende 2 und/oder der Bereich hinter der Linse 1 zumindest teilweise ein Medium der oben beschriebenen Art auf. Vorzugsweise können auch weitere konstruktiv bedingte Vertiefungen und Hohlräume ein Medium der beschriebenen Art aufweisen. In einer weiteren exemplarischen Ausführungsform sind der Hohlraum 8 bzw. die oben beschriebenen Bereiche vollständig durch ein Medium ausgefüllt bzw. durch dieses ersetzt.

In einer weiteren exemplarischen Ausführungsform weist die Vorrichtung nur eine Linse 1 oder nur Linsen 1 auf, die vorzugsweise in Lichteinfallrichtung vor der Blende 2 bzw. in Lichteinfallrichtung vor bzw. außerhalb der Einrichtung 3 zum Absorbieren oder Ableiten von Licht angeordnet ist/sind. Vorzugsweise weist die Einrichtung 3 zum Absorbieren oder Ableiten von Licht keine Linse 3 auf.

Wie in Figur 2 dargestellt, weist die Vorrichtung in einer besonders bevorzugten Ausführungsform mindestens eine Lichtquelle 4 auf. Die Lichtquelle 4 ist im gezeigten Beispiel direkt benachbart zur Blendenöffnung 6 angeordnet. Das von der Lichtquelle 4 abgestrahlte Licht wird von der Linse 1 in ein im wesentlichen paralleles Strahlenbündel gewandelt, das hier mit der gestrichelten Linie 9 angedeutet ist. Lichtquelle 4 ist bevorzugt als aktive oder passive Lichtquelle ausgebildet. In einer bevorzugten erfindungsgemäßen Ausführungsform werden sowohl aktive als auch passive Lichtquellen bzw. Lichtventile oder Lichtleiter verwendet. Als aktive Lichtquellen 4 werden vorzugsweise Laser, Glühlampen, lichtemittierende Dioden (LEDs), Elektrolumineszenz-Folien (EL-Folien), Neonröhren und/oder organische LEDs (OLED), etc. verwendet. Passive Lichtquellen bzw. Lichtventile oder Lichtleiter 4 nutzen das einfallende Licht, welches sie vorzugsweise reflektieren. Hierzu weisen die Lichtquellen 4 vorzugsweise eine reflektierende Oberfläche bzw. Schicht auf. In einer besonders bevorzugten Ausführungsform ist die Lichtquelle 4 als Flüssigkristallanzeige ausgebildet

In einer weiteren bevorzugten Ausführungsform ist die Lichtquelle 4 als Fläche bzw. flächig ausgebildet, wobei diese eine Öffnung in Blendengröße oder größer aufweist. Diese Lichtquelle 4 ist vorzugsweise als OLED ausgebildet und/oder weist ein fluoreszierendes Material bzw. Lampe(n) auf.

Die mindestens eine Lichtquelle 4 kann alternativ auch vor, in und/oder neben der Linse 1 angeordnet sein. In den besonders bevorzugten Ausführungsformen wird die Linse 1 zur Streuung des von der Lichtquelle 4 abgestrahlten Lichts 9 verwendet.

In einer weiteren bevorzugten erfindungsgemäßen Ausführungsform wird das Licht mindestens einer Lichtquelle 4 mittels mindestens eines Lichtleiters an einen bevorzugten Ort, vorzugsweise benachbart zur Blendenöffnung 6, geleitet. In weiteren bevorzugten erfindungsgemäßen Ausführungsformen weist mindestens eine Lichtquelle 4 weitere optische Einrichtungen, wie beispielsweise Linsen oder Spiegel auf. Die Lichtquellen 4 geben in einer weiteren bevorzugten Ausführungsform Licht unterschiedlicher Farben ab. In einer weiteren bevorzugten Ausführungsform weist die Vorrichtung je Linse 4 drei Lichtquellen auf, die jeweils Licht einer der drei Grundfarben abgeben. Vorzugsweise geben die drei Lichtquellen 4 jeweils Licht einer unterschiedlichen Grundfarbe ab.

Entsprechend einer exemplarischen Ausführungsform weist die Vorrichtung eine Lichtquelle 4 in Lichteinfallrichtung hinter (in der Zeichnung rechts) der Blende 2 bzw. in der Einrichtung zum Ableiten und/oder Absorbieren von Licht 3, dem Hohlraum 8 und/oder der Fläche 7 auf (nicht dargestellt). Diese Lichtquelle 4 ist vorzugsweise als aktive Lichtquelle 4 und besonders bevorzugt als Laser oder Diode ausgebildet, wobei das von der Lichtquelle abgegebene Licht gebündelt bzw. konzentriert durch die Blendenöffnung 6 nach außen gelangt und vorzugsweise durch die Linse 1 aufgeweitet bzw. gestreut wird. Hierbei ist die Lichtquelle 4 vorzugsweise derart ausgebildet bzw. angeordnet, daß sie die ableitenden und/oder absorbierenden Eigenschaften der Einrichtung 3 im wesentlichen nicht beeinflußt.

In einer weiteren bevorzugten Ausführungsform weist die Vorrichtung mindestens einen Schirm 10 auf, der in der Umgebung der Linse 1 angeordnet ist und der die Vorrichtung bzw. die Linse 1 gegen Lichteinfall aus ungünstigen Einfallswinkeln schützt.

Figur 3 zeigt eine bevorzugte erfindungsgemäße Ausführungsform, wobei die Vorrichtung eine Anordnung von drei Vorrichtungen, wie sie im Zusammenhang mit Figur 1 und/oder Figur 2 beschrieben wurden, aufweist. Die Vorrichtungen sind hierbei bevorzugt nebeneinander und/oder übereinander angeordnet. Dabei können eine große Zahl dieser Vorrichtungen ein zwei-dimensionales Feld bilden.

In einer besonders bevorzugten erfindungsgemäßen Ausführungsform sind hierbei mehrere Vorrichtungen, die eine Linse 1, eine Blende 2, eine Einrichtung 3 mit einer Fläche 7 sowie einer Lichtquelle 4 aufweisen, so angeordnet, daß die Linsen 1, Blenden 2 und Flächen 7 in jeweils einer Ebene liegen.

Figur 4 zeigt eine besonders bevorzugte erfindungsgemäße Ausführungsform einer Vorrichtung, die drei Linsen 1, eine Blende 2 mit drei Öffnungen 6 sowie eine Einrichtung 3 mit einer Fläche 7 aufweist. Die Ausbildung der einzelnen Merkmale erfolgt bevorzugt wie im Zusammenhang mit den vorstehenden Figuren beschrieben. Insbesondere können auch eine Vielzahl von Linsen 1 und Öffnungen 6 vorgesehen werden, die beispielsweise als zwei-dimensionales Feld angeordnet werden.

Die in den Figuren 3 und 4 beschriebenen bevorzugten Ausführungsformen weisen vorzugsweise Elemente mit gleichen oder sich entsprechenden Ausbildungen und/oder Eigenschaften auf. In einer weiteren bevorzugten Ausführungsform weisen die einzelnen Elemente, wie beispielsweise Linsen 1, Blenden 2, Blendenöffnungen 6 oder Einrichtungen 3 unterschiedliche Ausbildungen und/oder Eigenschaften auf. In einer weiteren bevorzugten erfindungsgemäßen Ausführungsform ist der Abstand Linse 1/Blende 2 mittels der Linse 1 und/oder der Blende 2 variabel einstellbar. In einer weiteren bevorzugten Ausführungsform ist die Position und/oder Größe der Blendenöffnung 6 variabel einstellbar. Über derartige Einstellmöglichkeiten läßt sich die Vorrichtung vorzugsweise entsprechend den erwarteten und/oder gegebenen Einsatzbedingungen einstellen. In einer weiteren bevorzugten Ausführungsform weist die Vorrichtung Sensoren auf, die den Einfallswinkel und/oder die Intensität des Störlichts 5 ermitteln, wonach die Blende 2, Größe der Blendenöffnung 6, Position der Blendenöffnung 6 und/oder Abstand Linse 1/Blende 2 entsprechend eingestellt wird und oder einstellbar ist.

In einer weiteren bevorzugten Ausführungsform ist die Linse 1 vorzugsweise quadratisch, rechteckig, rund oder oval ausgeführt. Weist eine erfindungsgemäße Vorrichtung mehrere Linsen 1 auf, so weisen diese vorzugsweise die gleichen oder aber unterschiedliche Formen und Ausbildungen auf.

In einer weiteren bevorzugten erfindungsgemäßen Ausführungsform, ist die Blendenöffnung 6 rund, oval oder als Schlitz ausgebildet. In einer bevorzugten Ausführungsform werden länglich ausgebildete Linsen 1 in Kombination mit Schlitzblenden 2 verwendet.

Figur 5 zeigt eine exemplarische Ausführungsform, wobei die Lichtquelle 4 bzw. die Lichtquellen 4 selbst als Linse(n) 1 ausgebildet ist/sind. Hierbei leitet/leiten die Lichtquelle(n) 4 bzw. Linse(n) 1 das einfallende Licht durch die Blendenöffnung(en) 6 zur Einrichtung 3 bzw. den Einrichtungen 3 und strahlt bzw. strahlen das eigene Licht 9 ab. Die in Figur 5 dargestellte Kombination aus Lichtquelle 4 und Linse 1 wird vorzugsweise auch in Verbindung mit den anderen bevorzugten erfindungsgemäßen Ausführungsformen angewandt.

In einer weiteren bevorzugten Ausführungsform ist die Lichtleistung der Lichtquelle 4 variabel einstellbar.

Durch bevorzugte Anordnung des Spiegelelements bzw. der Spiegelelemente wird die Bündelung, Abstrahlung, Reflexion und/oder Absorption der Vorrichtung unterstützt. Des weiteren sind alle optischen bzw. lichtdurchlässigen Elemente der Vorrichtung, wie beispielsweise Linse 1 und/oder Lichtquelle 4, mit einer Antireflexbeschichtung versehen, um beispielsweise u.a. eine Reflexion des einfallenden Lichts 5 and der Außenfläche der Linse 1 zu verhindern. In einer weiteren bevorzugten Ausführungsform weisen die nicht-optischen Elemente der Vorrichtung, wie beispielsweise Blende 2, Schirm 10 und/oder Gehäuseteile absorbierende Eigenschaften, beispielsweise durch dunkle bzw. schwarze Farbe und/oder aufgerauhte Oberfläche auf. Diese Elemente sind vorzugsweise mit Graphit und/oder aufgerauhtem Graphit beschichtet.

In einer weiteren bevorzugten erfindungsgemäßen Ausführungsform ist die Blende 2 als Flüssigkristallanzeige ausgebildet.

Figur 6 zeigt eine bevorzugte erfindungsgemäße Ausführungsform, wobei die Vorrichtung mehrere Linsen 1, Blenden 2 und Lichtelemente 4 sowie eine oder mehrere Einrichtungen 3 aufweist. Diese sind derart als Ringe konzentrisch zueinander angeordnet, daß die Linsen 1 einen Bereich von bis zu 360° im Umfang um die Blenden 2 und die Einrichtung(en) 3 aufweisen. Eine derartige Anordnung ist vorzugsweise kreisförmig und/oder als Vieleck ausgebildet. In weiteren bevorzugten Ausführungsformen ist die Vorrichtung und/oder ein Vorrichtungsarray flach, kubisch, zylindrisch, als Kreissegment, etc. ausgebildet. Hierdurch kann vorzugsweise u.a. der Abstrahlwinkel vergrößert werden.

Figur 7 zeigt eine bevorzugte erfindungsgemäße Ausführungsform, bei der die Einrichtung 3 eine vorzugsweise in ihrer Form veränderte und/oder vergrößerte Fläche 7 und/oder Innenfläche des Hohlraums 8 aufweist. In dem gezeigten Beispiel weist der Hohlraum 8 eine trichterförmige Erweiterung auf. Vorzugsweise ist die Fläche 7 bzw. die Innenoberfläche des Hohlraums 8 der Einrichtung 3 aufgerauht, wellig, bezüglich des einfallenden Lichtes angeschrägt und/oder pyramidenartig strukturiert, etc. Des weiteren ist der Hohlraum 8 der Einrichtung vorzugsweise zylindrisch, kegelförmig, kugelförmig und/oder quaderförmig ausgebildet.

In einer weiteren bevorzugten erfindungsgemäßen Ausführungsform ist die Lichtquelle 4 als Flüssigkristalldisplay ausgebildet, die vom Störlicht beleuchtet wird.

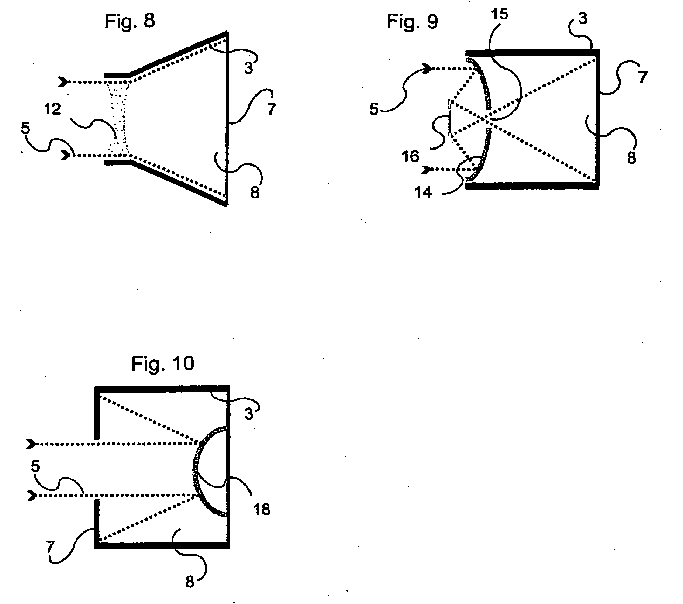

Figur 8 zeigt eine exemplarische Ausführungsform, bei der anstelle der Linse 1 eine Licht streuende Einrichtung eingesetzt wird, die vorzugsweise als Streulinse 12 ausgebildet ist und so die Blende 2 ersetzt. Die Vorrichtung weist in dem gezeigten Beispiel eine Streulinse 12 mit konkaven Oberflächen sowie eine Einrichtung 3 mit einer Fläche 7 auf. Das durch die Streulinse 12 eintretende Licht wird gestreut, d.h. das Lichtstrahlbündel wird aufgeweitet und auf die vorzugsweise lichtabsorbierende Fläche 7 gerichtet. Bevorzugte Ausführungsformen entsprechen den zuvor beschriebenen.

In einer exemplarischen Ausführungsform weist die Vorrichtung mindestens einen Spiegel und/oder mindestens einen Spiegelabschnitt auf. Der Spiegel bzw. Spiegelabschnitt ist vorzugsweise zumindest teilweise gekrümmt und/oder geknickt. Figur 9 zeigt ein Beispiel mit einem gekrümmten ersten Spiegel 14, der vorzugsweise als Parabolspiegel ausgebildet ist. Bei diesem Beispiel ist etwa in der Mitte des ersten Spiegels eine Öffnung 15 vorgesehen. Im Abstand bezogen auf die Richtung des einfallenden Lichts vor dem Spiegel 14 ist ein zweiter Spiegel 16 angeordnet. Der zweite Spiegel 16 ist in dem Beispiel als flache Reflektorfläche ausgebildet. Das auf den ersten Spiegel 14 auftreffende Licht 5 wird zum zweiten Spiegel 18 reflektiert und von diesem auf die Öffnung 15 im ersten Spiegel gerichtet. Die Anordnung und/oder Form der Spiegel ist dabei so gewählt dass das auftreffende Licht durch die Öffnung 15 eintritt und auf die dahinter angeordnete Fläche 7 trifft. Das Licht wird wie zuvor im Zusammenhang mit den anderen Beispielen beschrieben absorbiert. Figur 10 zeigt eine alternative exemplarische Ausführungsform bei der im Hohlraum 8 ein Streuspiegel 16 angeordnet ist. Das in den Hohlraum eintretende Licht 5 wird an dem als konvexer Spiegel ausgebildeten Streuspiegel 16 reflektiert und auf die lichtabsorbierende Fläche 7 gerichtet.

Die beschriebene Konstruktion bzw. die Einrichtung 3 ist in einer bevorzugten erfindungsgemäßen Ausführungsform als Spritzgußteil herstellbar. Die Linse 1 sowie der Spiegel 14, 16 sind vorzugsweise als Glas- oder Kunststofflinse bzw. Spiegel ausgebildet. Diese sind in einer weiteren bevorzugten Ausführungsform in die als Spritzgußteil hergestellte Einrichtung 3 einleg- bzw. einsetzbar.

Erfindungsgemäße Vorrichtungen und Verfahren werden bevorzugt im Bereich der Verkehrsbeeinflussung, wie z.B. in Verbindung mit Ampeln, Warn-, Gebots- und Verbotsschildern, Verkehrsleitsystemen etc. verwendet.

In einer weiteren bevorzugten Ausführungsform ist die Vorrichtung in Nanotechnologie ausgeführt, um tageslichttaugliche Kleindisplays herzustellen. Weitere Erfindungsgemäße Vorrichtungen werden als Kleindisplay im Bereich elektronischer Geräte, wie z.B. Taschenrechner, Radio, Telefon etc. verwendet.

Der technologische Hintergrund sowie der Einsatz und Anwendungsbereich der erfindungsgemäßen Vorrichtungen zeigt, daß diese vorzugsweise nicht in der Größe eingeschränkt sind, sondern sich je nach Anwendungsfall in Ausbildung, Form und/oder Größe erheblich unterscheiden können. '

Die einzelnen Merkmale der vorstehend beschriebenen bevorzugten Ausführungsbeispiele sind in ihren Ausbildungen in weiteren bevorzugten Ausführungsformen beliebig kombinierbar.

Die erfindungsgemäße Vorrichtung hat den Vorteil, daß der Kontrast einer Anzeige- oder Signalvorrichtung zwischen Anzeigesymbol und Hintergrund erhöht wird, so daß die Anzeige bzw. das Signal durch einen Betrachter und/oder den Anwender deutlicher und klarer wahrnehmbar ist. Dies erweist sich vor allem bei Anwendungen bei Tageslicht oder mit Gegenlicht als praktikabel. Weiterhin ermöglicht die erfindungsgemäße Vorrichtung die Einsparung von Energie, da die Lichtquellen aufgrund des erhöhten Kontrastes weniger Leistung benötigen. In einigen bevorzugten Ausführungsformen wird keinerlei elektrische Leistung benötigt.

## Patentansprüche

1. Vorrichtung zur Kontrastverstärkung für Anzeigevorrichtungen aufweisend mindestens eine fokussierende optische Einrichtung (1), die mindestens eine Linse (1) aufweist,
mindestens eine hinter der mindestens einen Linse (1) angeordnete Blende (2) mit mindestens einer Blendenöffnung (6), und mindestens eine hinter der mindestens einen Blende (2) angeordnete Einrichtung zum Absorbieren von Licht (3), wobei die mindestens eine Linse (1) so angeordnet ist, daß sie einfallendes Licht (5) bündelt und durch die mindestens eine Blendenöffnung (6) zu der mindestens einen Einrichtung zum Absorbieren von Licht (3) leitet, wobei mindestens eine Lichtquelle (4) zwischen Linse (1) und Blende (2) angeordnet ist.

2. Vorrichtung nach Anspruch 1, wobei die Einrichtung zum Absorbieren von Licht (3) eine Fläche (7) aufweist, die in bezug auf das einfallende Licht (5) hinter der Blende (2) angeordnet ist.

3. Vorrichtung nach Anspruch 1 oder 2, wobei die Einrichtung zum Absorbieren von Licht (3) einen sich hinter der Blende (2) erstreckenden Hohlraum (8) aufweist.

4. Vorrichtung nach Anspruch 3, wobei der Hohlraum (8) zylindrisch, kegelförmig, kugelförmig und/oder quaderförmig ausgebildet ist.

5. Vorrichtung nach einem der vorangegangenen Ansprüche, wobei zumindest die Fläche (7) und/oder die Innenwände des Hohlraumes (8) bzw. der Einrichtung zum Absorbieren von Licht (3) absorbierende Eigenschaften aufweisen.

6. Vorrichtung nach einem der vorangegangenen Ansprüche, wobei zumindest die Wand (3) und/oder die Innenwände des Hohlraums (8) bzw. der Einrichtung zum Absorbieren von Licht (3) dunkel und/oder schwarz sind.

7. Vorrichtung nach einem der vorangegangenen Ansprüche, wobei zumindest die Fläche (7) und/oder die Innenwände des Hohlraums (8) bzw. der Einrichtung zum Absorbieren von Licht (3) zumindest teilweise beschichtet und/oder aufgerauht ist/sind.

8. Vorrichtung nach einem der vorangegangenen Ansprüche, wobei zumindest die Fläche (7) und/oder die Innenwände des Hohlraums (8) bzw. der Einrichtung zum Absorbieren von Licht (3) zumindest teilweise mit Graphit und/oder mit angerauhtem Graphit beschichtet ist.

9. Vorrichtung nach einem der Ansprüche 1 bis 8, wobei die Vorrichtung mehrere nebeneinanderliegende Blenden (2) aufweist.

10. Vorrichtung nach Anspruch 9, wobei die Blenden (2) bzw. Blendenöffnungen (6) verschiedene Größen aufweisen.

11. Vorrichtung nach einem der Ansprüche 1 bis 10, wobei die Größe der Blendenöffnung(en) (6) verstellbar ist/sind.

12. Vorrichtung, nach einem der vorangegangenen Ansprüche, aufweisend mehrere Linsen (1) wobei die Linsen quadratisch, rechteckig, rund und/oder oval ausgeführt sind.

13. Vorrichtung nach Anspruch 12, wobei die Linsen (1) aneinander anliegen.

14. Vorrichtung nach einem der Ansprüche 1 bis 13, wobei die Linse(n) (1) länglich ausgebildet ist/sind, und wobei die Blende(n) (2) eine Schlitzblende ist/sind.

15. Vorrichtung nach einem der vorangegangenen Ansprüche, wobei die Linsen (1) kubisch, zylindrisch und/oder als Kreissegment angeordnet sind.

16. Vorrichtung nach einem der Ansprüche 1 bis 15, wobei der Abstand Linse (1 )/Blende (2) verstellbar ist.

17. Vorrichtung nach einem der vorangegangenen Ansprüche, wobei die Vorrichtung weiterhin mindestens eine aktive und/oder passive Lichtquelle (4) aufweist.

18. Vorrichtung nach Anspruch 17, wobei die Linse (1) zur Fokussierung des abgestrahlten Lichts (9) verwendet wird.

19. Vorrichtung nach einem der Ansprüche 17 oder 18 wobei mindestens eine Lichtquelle (4) neben der Linse (1) angeordnet ist.

20. Vorrichtung nach einem der Ansprüche 17 bis 19, wobei mindestens eine Lichtquelle (4) vor, innerhalb und/oder hinter der Linse (1) angebracht ist.

21. Vorrichtung nach einem der, Ansprüche 17 bis 20, wobei mindestens eine Lichtquelle (4) weitere optische Einrichtungen aufweist.

22. Vorrichtung nach einem der Ansprüche 17 bis 21, wobei die aktive(n) Lichtquelle(n) (4) als Laser, Glühlampe, LED, EL-Folie, Neonröhre und/oder organisches LED ausgebildet ist/sind.

23. Vorrichtung nach einem der Ansprüche 17 bis 22, wobei die passive(n) Lichtquelle(n) (4) vom einfallenden Licht (5) aktiviert wird/werden.

24. Vorrichtung nach Anspruch 23, wobei die Lichtquelle (4) eine reflektierende Schicht ist.

25. Vorrichtung, nach Anspruch 23, wobei die Lichtquelle (4) eine Flüssigkristallanzeige ist.

26. Vorrichtung nach einem der Ansprüche 17 bis 25, wobei das Licht (9) der Lichtquelle(n) (4) über Lichtleiter an einen bevorzugten Ort geleitet wird.

27. Vorrichtung nach einem der Ansprüche 17 bis 26, wobei mehrere Lichtquellen (4) verschiedener Farben verwendet werden.

28. Vorrichtung nach Anspruch 27, wobei pro Linse drei Lichtquellen (4) angeordnet sind, die jeweils eine der drei Grundfarben aufweisen.

29. Vorrichtung nach einem der Ansprüche 17 bis 28, wobei die Lichtquelle(n) (4) selbst als Linse(n) (1) ausgebildet sind.

30. Vorrichtung nach Anspruch 29, wobei die Lichtquelle(n) (4) bzw. Linse(n) (1) das einfallende Licht (5) durch die Blendenöffnung (6) leiten und das eigene Licht (9) abstrahlen.

31. Vorrichtung nach einem der Ansprüche 17 bis 30, wobei die Lichtleistung der Lichtquelle (4) einstellbar ist.

32. Vorrichtung nach einem der vorangegangenen Ansprüche, wobei die Vorrichtung mindestens einen Spiegel und/oder mindestens einen Spiegelabschnitt aufweist.

33. Vorrichtung nach Anspruch 32, wobei der Spiegel bzw. der Spiegelabschnitt zumindest teilweise gekrümmt ist.

34. Vorrichtung nach einem der vorangegangenen Ansprüche, wobei alle optischen bzw. lichtdurchlässigen Elemente mit einer Antireflexbeschichtung versehen sind.

35. Vorrichtung nach einem der vorangegangenen Ansprüche, wobei die nicht-optischen Elemente dunkel bzw. schwarz und/oder aufgerauht ausgeführt sind.

36. Vorrichtung nach Anspruch 35, wobei die Elemente mit Graphit und/oder aufgerauhtem Graphit beschichtet sind.

37. Vorrichtung nach einem der vorangegangenen Ansprüche, wobei die Vorrichtung mindestens einen Schirm (10) aufweist, der benachbart mindestens einer Linse (1) angeordnet ist und der die Vorrichtung gegen Lichteinfall aus ungünstigen Einfallswinkeln schützt.

38. Vorrichtung nach einem der vorangegangenen Ansprüche, wobei die Blende (2) als Flüssigkristallanzeige ausgebildet ist.

39. Vorrichtung nach einem der vorangegangenen Ansprüche, wobei die Lichtquelle (4) als Fläche bzw. flächig ausgebildet ist und eine Öffnung in Blendengröße oder größer aufweist.

40. Vorrichtung nach einem der vorangegangenen Ansprüche, wobei die Lichtquelle (4) vorzugsweise als OLED oder ein fluoreszierendes Material aufweisend ausgebildet ist.

41. Vorrichtung nach einem der vorangegangenen Ansprüche, wobei der Einfallswinkel des Störlichts (5) mit Hilfe von Sensoren ermittelt und die Position der Blende (2), die Größe der Blendenöffnung (6) und/oder deren Position entsprechend einstellbar ist.

42. Vorrichtung nach einem der vorangegangenen Ansprüche, wobei Hohlraum (8), der Bereich zwischen Linse (1) und Blende (2) und/oder der Bereich hinter der Blende (2) ein vorzugsweise lichtdurchlässiges Material und/oder Fluid aufweist bzw. aufweisen.

43. Verfahren zur Kontrastverstärkung für Anzeigevorrichtungen mit mindestens einer Vorrichtung nach einem der vorangegangenen Ansprüche.

44. Verfahren zur Kontrastverstärkung für Anzeigevorrichtungen aufweisend die Schritte:
Bündeln des einfallenden Lichtes (5) mittels mindestens einer Linse (1) Durchleiten des gebündelten Lichts durch eine Blende (2) in eine Einrichtung zum Absorbieren von Licht (3), wo es absorbiert wird zum
Erzeugen eines dunklen Hintergrundes und Anordnen mindestens einer Lichtquelle (4) zwischen Linse (1) und Blende (2).

45. Verfahren nach Anspruch 43 oder 44, wobei ferner vom dunklen Hintergrund aus und/oder aus der Umgebung des dunklen Hintergrundes Licht mittels mindestens einer aktiven und/oder passiven Lichtquelle (4) abgegeben wird.

46. Verfahren nach einem der Ansprüche 43 bis 45, wobei der Einfallswinkel des Störlichts (5) mit Hilfe von Sensoren ermittelt und die Größe der Blendenöffnung (6) und/oder deren Position entsprechend eingestellt wird.

## Claims

1. A device for contrast enhancement for display devices, comprising
at least one focussing optical means (1) comprising at least one lens (1),
at least one diaphragm (2) arranged behind the at least one lens (1) comprising at least one aperture (6); and
at least one means (3) arranged behind the at least one diaphragm (2) for absorbing light, wherein the at least one lens (1) is arranged such that it focuses incident light (5) and directs it through the at least one aperture (6) to the at least one means (3) for absorbing light, wherein at least one light source (4) is arranged between the lens (1) and the diaphragm (2).

2. The device according to claim 1, wherein the means (3) for absorbing light comprises an area (7) being arranged, relative to the incident light (5), behind the diaphragm (2).

3. The device according to claim 1 or 2, wherein the means (3) for absorbing light comprises a cavity (8) extending behind the diaphragm (2).

4. The device according to claim 3, wherein the cavity (8) has a cylindrical, conical, spherical, and/or cuboid configuration.

5. The device according to any one of the preceding claims, wherein at least the area (7) and/or the inner walls of the cavity (8) or the means (3) for absorbing light has/have absorbing properties.

6. The device according to any one of the preceding claims, wherein at least the wall (3) and/or the inner walls of the cavity (8) or the means (3) for absorbing light is/are dark and/or black.

7. The device according to any one of the preceding claims, wherein at least the area (7) and/or the inner walls of the cavity (8) or the means (3) for absorbing light is/are at least partially coated and/or roughened.

8. The device according to any one of the preceding claims, wherein at least the area (7) and/or the inner walls of the cavity (8) or the means (3) for absorbing light is/are at least partially coated with graphite and/or with roughened graphite.

9. The device according to any one of claims 1 to 8, wherein the device comprises several diaphragms (2) arranged adjacent to each other.

10. The device according to claim 9, wherein the diaphragms (2) or the apertures (6) have different sizes.

11. The device according to any one of claims 1 to 10, wherein the size of the aperture(s) (6) is/are adjustable.

12. The device according to any one of the preceding claims, comprising several lenses (1), wherein the lenses are square, rectangular, round and/or oval.

13. The device according to claim 12, wherein the lenses (1) abut on each other.

14. The device according to any one of claims 1 to 13, wherein the lens(es) (1) is/are elongate and wherein the diaphragm(s) (2) is/are (a) slit diaphragm(s).

15. The device according to any one of the preceding claims, wherein the lenses (1) are arranged cubically, cylindrically and/or as a segment of a circle.

16. The device according to any one of claims 1 to 15, wherein the distance between lens (1) and diaphragm (2) is adjustable.

17. The device according to any one of the preceding claims, wherein the device further comprises at least one active and/or passive light source (4).

18. The device according to claim 17, wherein the lens (1) is used for focussing the emitted light (9).

19. The device according to claim 17 or 18, wherein at least one light source (4) is arranged beside the lens (1).

20. The device according to any one of claims 17 to 19, wherein at least one light source (4) is arranged in front of, within and/or behind the lens (1).

21. The device according to any one of claims 17 to 20, wherein at least one light source (4) comprises further optical means.

22. The device according to any one of claims 17 to 21, wherein the active light source(s) (4) is/are configured as laser, incandescent lamp, LED, EL foil, neon tube and/or an organic LED.

23. The device according to any one of claims 17 to 22, wherein the passive light source(s) (4) is/are activated by the incident light (5).

24. The device according to claim 23, wherein the light source (4) is a reflective layer.

25. The device according to claim 23, wherein the light source (4) is a liquid crystal display.

26. The device according to any one of claims 17 to 25, wherein the light (9) of the light source(s) (4) is directed via optical waveguides to a preferred place.

27. The device according to any one of claims 17 to 26, wherein several light sources (4) of different colours are used.

28. The device according to claim 27, wherein three light sources (4) are arranged per lens, each of which exhibiting one of the three primary colours.

29. The device according to any one of claims 17 to 28, wherein the light source(s) (4) is/are (a) lens(es) (1) itself/themselves.

30. The device according to claim 29, wherein the light source(s) (4) and/or lens(es) (1) directs/direct the incident light (5) through the aperture (6) and emits/emit its/their own light (9).

31. The device according to any one of claims 17 to 30, wherein the light efficiency of the light source (4) is adjustable.

32. The device according to any one of the preceding claims, wherein the device comprises at least one mirror and/or at least one mirror section.

33. The device according to claim 32, wherein the mirror and/or the mirror section is/are at least partly curved.

34. The device according to any one of the preceding claims, wherein all optical and/or translucent elements are provided with an antireflective coating.

35. The device according to any one of the preceding claims, wherein the non-optical elements are dark or black and/or roughened.

36. The device according to claim 35, wherein the elements are coated with graphite and/or roughened graphite.

37. The device according to any one of the preceding claims, wherein the device comprises at least one shield (10), which is arranged adjacent to at least one lens (1) and protects the device against light incidence from unfavourable angles of incidence.

38. The device according to any one of the preceding claims, wherein the diaphragm (2) is a liquid crystal display.

39. The device according to any one of the preceding claims, wherein the light source (4) is an area or sheet-like and has an opening in the size of the diaphragm aperture or larger.

40. The device according to any one of the preceding claims, wherein the light source (4) is preferably an OLED or comprises a fluorescent material.

41. The device according to any one of the preceding claims, wherein the angle of incidence of the extraneous light (5) is determined with the aid of sensors and the position of the diaphragm (2), the size of the aperture (6) and/or their position is/are adjustable accordingly.

42. The device according to any one of the preceding claims, wherein the cavity (8), the area between the lens (1) and the diaphragm (2) and/or the area behind the diaphragm (2) comprise(s) a preferably translucent material and/or fluid.

43. A method for contrast enhancement for display devices comprising at least one device according to any one of the preceding claims.

44. A method for contrast enhancement for display devices comprising the following steps:
focussing the incident light (5) by means of at least one lens (1), directing the focussed light through a diaphragm (2) into a means (3) for absorbing light, where it is absorbed for creating a dark background and arranging at least one light source (4) between the lens (1) and diaphragm (2).

45. The method according to claim 43 or 44, wherein light is further emitted from the dark background and/or from the environment of the dark background by means of at least one active and/or passive light source (4).

46. The method according to any one of claims 43 to 45, wherein the angle of incidence of the extraneous light (5) is determined with the aid of sensors and the size of the aperture (6) and/or its position is/are adjusted accordingly.

## Revendications

1. Système pour l'amplification de contraste pour des unités d'affichage, comprenant
au moins un dispositif de focalisation optique (1), comportant au moins une lentille (1),
au moins un diaphragme (2) disposé derrière la au moins une lentille (1), avec au moins une ouverture de diaphragme (6), et
au moins un dispositif d'absorption de lumière (3) disposé derrière le au moins un diaphragme (2), la au moins une lentille (1) étant disposée de manière à focaliser la lumière incidente (5) et à la guider par la au moins une ouverture de diaphragme (6) vers le au moins un dispositif d'absorption de lumière (3), au moins une source lumineuse (4) étant disposée entre la lentille (1) et le diaphragme (2).

2. Système selon la revendication 1, dans lequel le dispositif d'absorption de lumière (3) comporte une surface (7) disposée derrière le diaphragme (2) par rapport à la lumière incidente (5).

3. Système selon la revendication 1 ou 2, dans lequel le dispositif d'absorption de lumière (3) comporte une cavité (8) ménagée derrière le diaphragme (2).

4. Système selon la revendication 3, dans lequel la cavité (8) est de forme cylindrique, conique, sphérique et/ou cubique.

5. Système selon l'une des revendications précédentes, dans lequel au moins la surface (7) et/ou les parois intérieures de la cavité (8) ou du dispositif d'absorption de lumière (3) présentent des propriétés absorbantes.

6. Système selon l'une des revendications précédentes, dans lequel au moins la paroi (3) et/ou les parois intérieures de la cavité (8) ou du dispositif d'absorption de lumière (3) sont sombres et/ou noires.

7. Système selon l'une des revendications précédentes, dans lequel au moins la surface (7) et/ou les parois intérieures de la cavité (8) ou du dispositif d'absorption de lumière (3) sont au moins partiellement revêtues et/ou rugosifiées.

8. Système selon l'une des revendications précédentes, dans lequel au moins la surface (7) et/ou les parois intérieures de la cavité (8) ou du dispositif d'absorption de lumière (3) sont au moins partiellement revêtues de graphite et/ou de graphite rugosifié.

9. Système selon l'une des revendications 1 à 8, dans lequel le système comprend plusieurs diaphragmes (2) disposés côte à côte.

10. Système selon la revendication 9, dans lequel les diaphragmes (2) ou les ouvertures de diaphragme (6) présentent des grandeurs différenciées.

11. Système selon l'une des revendications 1 à 10, dans lequel la grandeur de(s) l'ouverture(s) de diaphragme (6) est/sont réglable(s).

12. Système selon l'une des revendications précédentes, comprenant plusieurs lentilles (1), lesdites lentilles étant carrées, rectangulaires, circulaires et/ou ovales.

13. Système selon la revendication 12, dans lequel les lentilles (1) sont disposées l'une contre l'autre.

14. Système selon l'une des revendications 1 à 13, dans lequel la ou les lentilles (1) est/sont oblongue(s), et dans lequel le(s) diaphragme(s) (2) est/sont un/des diaphragme(s) à fente.

15. Système selon l'une des revendications précédentes, dans lequel les lentilles (1) sont cubiques, cylindriques, et/ou disposées en segment de cercle.

16. Système selon l'une des revendications 1 à 15, dans lequel la distance lentille (1)/diaphragme (2) est réglable.

17. Système selon l'une des revendications précédentes, dans lequel le système comprend en outre au moins une source lumineuse (4) active et/ou passive.

18. Système selon la revendication 17, dans lequel la lentille (1) est utilisée pour la focalisation de la lumière diffusée (9).

19. Système selon l'une des revendications 17, 18, dans lequel au moins une source lumineuse (4) est disposée à côté de la lentille (1).

20. Système selon l'une des revendications 17 à 19, dans lequel au moins une source lumineuse (4) est disposée devant, dans et/ou derrière la lentille (1).

21. Système selon l'une des revendications 17 à 20, dans lequel au moins une source lumineuse (4) comprend d'autres dispositifs optiques.

22. Système selon l'une des revendications 17 à 21, dans lequel la ou les source(s) lumineuse(s) (4) active(s) est/sont prévue(s) en tant que laser, lampe à incandescence, LED, film électroluminescent, tube néon et/ou LED organique.

23. Système selon l'une des revendications 17 à 22, dans lequel la ou les source(s) lumineuse(s) (4) passive(s) est/sont activée(s) par la lumière incidente (5).

24. Système selon la revendication 23, dans lequel la source lumineuse (4) est une couche réfléchissante.

25. Système selon la revendication 23, dans lequel la source lumineuse (4) est un afficheur à cristaux liquides.

26. Système selon l'une des revendications 17 à 25, dans lequel la lumière (9) de la ou des source(s) lumineuse(s) (4) est guidée vers un endroit quelconque par conducteur de lumière.

27. Système selon l'une des revendications 17 à 26, dans lequel plusieurs sources lumineuses (4) de couleurs différentes sont utilisées.

28. Système selon la revendication 27, dans lequel trois sources lumineuses (4) sont disposées par lentille, lesquelles présentent chacune une des trois couleurs primaires.

29. Système selon l'une des revendications 17 à 28, dans lequel la ou les source(s) lumineuse(s) (4) est/sont elle(s)-même(s) réalisée(s) sous forme de lentille(s) (1).

30. Système selon la revendication 29, dans lequel la ou les source(s) lumineuse(s) (4), ou la ou les lentille(s) (1) guide(nt) la lumière incidente (5) au travers de l'ouverture de diaphragme (6) et diffusent la lumière propre (9).

31. Système selon l'une des revendications 17 à 30, dans lequel l'intensité lumineuse de la source lumineuse (4) est réglables.

32. Système selon l'une des revendications précédentes, dans lequel le système comprend au moins un miroir et/ou au moins un segment de miroir.

33. Système selon la revendication 32, dans lequel le miroir et/ou le segment de miroir est/sont au moins partiellement bombé(s).

34. Système selon l'une des revendications précédentes, dans lequel tous les éléments optiques et/ou translucides sont pourvus d'un revêtement anti-réfléchissant.

35. Système selon l'une des revendications précédentes, dans lequel les éléments non optiques sont sombres ou noirs et/ou rugosifiés.

36. Système selon la revendication 35, dans lequel les éléments sont revêtus de graphite et/ou de graphite rugosifié.

37. Système selon l'une des revendications précédentes, dans lequel le système comprend au moins un écran (10) disposé à proximité d'au moins une lentille (1) et qui protège le système contre l'incidence lumineuse d'angles d'incidence défavorables.

38. Système selon l'une des revendications précédentes, dans lequel le diaphragme (2) est réalisé comme afficheur à cristaux liquides.

39. Système selon l'une des revendications précédentes, dans lequel la source lumineuse (4) est réalisée comme surface ou en nappe, et comporte une ouverture de grandeur égale ou supérieure au diaphragme.

40. Système selon l'une des revendications précédentes, dans lequel la source lumineuse (4) est de préférence réalisée comme OLED ou comprend une matière fluorescente.

41. Système selon l'une des revendications précédentes, dans lequel l'angle d'incidence de la lumière parasite (5) est déterminé au moyen de capteurs, et la position du diaphragme (2), la grandeur de l'ouverture de diaphragme (6) et/ou la position de celle-ci sont réglables en conséquence.

42. Système selon l'une des revendications précédentes, dans lequel la cavité (8), la zone entre la lentille (1) et le diaphragme (2) et/ou la zone derrière le diaphragme (2) comportent une matière et/ou un fluide de préférence translucide.

43. Procédé pour l'amplification de contraste pour des unités d'affichage avec au moins un système selon l'une des revendications précédentes.

44. Procédé pour l'amplification de contraste pour des unités d'affichage, comprenant les étapes suivantes :
focalisation de la lumière incidente (5) au moyen d'au moins une lentille (1),
guidage de la lumière focalisée au travers d'un diaphragme (2) dans un dispositif d'absorption de lumière (3) où celle-ci est absorbée, pour la formation d'un fond sombre, et
disposition d'au moins une source lumineuse (4) entre la lentille (1) et le diaphragme (2).

45. Procédé selon la revendication 43 ou 44, dans lequel de la lumière est en outre émise depuis le fond sombre et/ou depuis l'environnement du fond sombre, au moyen d'au moins une source lumineuse (4) active et/ou passive.

46. Procédé selon l'une des revendications 43 à 45, dans lequel l'angle d'incidence de la lumière parasite (5) est déterminé au moyen de capteurs, et où la grandeur de l'ouverture de diaphragme (6) et/ou la position de celle-ci sont réglées en conséquence.
